# EUROPÄISCHE PATENTSCHRIFT

(11) **EP 3 421 758 B1**
(45) Veröffentlichungstag und Bekanntmachung des Hinweises auf die Patenterteilung: **01.04.2020**
(21) Anmeldenummer: 18176739.3
(22) Anmeldetag: 08.06.2018
(51) Int. Cl.: F02B 75/04, F16K 31/363, F16K 11/07

(54) **UMSCHALTVENTIL ZUM STEUERN EINES HYDRAULIKFLÜSSIGKEITSSTROMS EINES PLEUELS FÜR EINE BRENNKRAFTMASCHINE MIT VARIABLER VERDICHTUNG SOWIE PLEUEL**
SWITCHING MODULE FOR CONTROLLING A HYDRAULIC FLUID STREAM OF A CONNECTING ROD FOR A COMBUSTION ENGINE WITH VARIABLE COMPRESSION AND CONNECTING ROD
SOUPAPE D'INVERSION PERMETTANT DE COMMANDER UN FLUX DE FLUIDE HYDRAULIQUE D'UNE BIELLE POUR UN MOTEUR À COMBUSTION INTERNE À COMPRESSION VARIABLE AINSI QUE BIELLE

(30) Priorität: 27.06.2017 DE 102017114263; 26.03.2018 DE 102018107076
(43) Veröffentlichungstag der Anmeldung: 02.01.2019
(73) Patentinhaber: ECO Holding 1 GmbH, 97828 Marktheidenfeld (DE)
(72) Erfinder: Rupp, Wolfgang, 97906 Faulbach (DE); Mudra, Alexander, 97828 Marktheidenfeld (DE)

(56) Entgegenhaltungen:
- WO-A1-2016/096381
- DE-A1-102013 107 127
- DE-A1-102015 111 175
- DE-A1-102015 215 241
- DE-A1-102016 107 986
- US-A1- 2017 082 021

## Beschreibung

### Technisches Gebiet

Die Erfindung betrifft ein Pleuel für eine Brennkraftmaschine mit variabler Verdichtung mit einem Umschaltventil zum Steuern eines Hydraulikflüssigkeitsstroms des Pleuels mit einer Exzenter-Verstelleinrichtung zur Verstellung einer effektiven Pleuelstangenlänge.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuellänge bekannt.

### Offenbarung der Erfindung

Eine Aufgabe der Erfindung ist es, ein Pleuel für eine Brennkraftmaschine mit variabler Verdichtung mit einem Umschaltventil und mit einer Exzenter-Verstelleinrichtung zur Verstellung einer effektiven Pleuelstangenlänge zu schaffen, welches hinsichtlich der Herstellbarkeit verbessert ist. Gleichzeitig soll eine hydraulische Aktuierung des Umschaltventils verbessert werden.

Die vorgenannten Aufgaben werden mit den Merkmalen der unabhängigen Ansprüche gelöst.

Günstige Ausgestaltungen und Vorteile der Erfindung ergeben sich aus den weiteren Ansprüchen, der Beschreibung und der Zeichnung.

Nach einem Aspekt der Erfindung wird ein Umschaltventil vorgeschlagen zum Steuern eines Hydraulikflüssigkeitsstroms eines Pleuels für eine Brennkraftmaschine mit variabler Verdichtung mit einer Exzenter-Verstelleinrichtung zur Verstellung einer effektiven Pleuelstangenlänge, wobei die Exzenter-Verstelleinrichtung wenigstens einen ersten Zylinder und einen zweiten Zylinder mit Hydraulikkammern aufweist und wobei sowohl jeweils ein Zulauf zum Zuführen von Hydraulikflüssigkeit in die Zylinder aus einer Versorgungsquelle als auch jeweils ein Ablauf zum Abführen von Hydraulikflüssigkeit von den Zylindern vorgesehen sind. Das Umschaltventil weist einen in einem Gehäuse beweglichen Stufenkolben auf, welcher wahlweise in eine erste Schaltstellung oder eine zweite Schaltstellung verlagerbar ist. In der ersten Schaltstellung ist der Ablauf des zweiten Zylinders und in der zweiten Schaltstellung der Ablauf des ersten Zylinders mit der Versorgungsquelle verbunden. Den Zylindern ist jeweils ein Rückschlagventil zugeordnet, welches ein Zuführen von Hydraulikflüssigkeit in die Zylinder ermöglicht und ein Abführen von Hydraulikflüssigkeit von den Zylindern verhindert. Die Zylinder sind derart verbunden, dass in der zweiten Schaltstellung Hydraulikflüssigkeit aus dem ersten Zylinder in den zweiten Zylinder direkt und ungedrosselt über das Umschaltventil leitbar ist.

Das erfindungsgemäße Umschaltventil ermöglicht eine hydraulische Anordnung beim Betrieb eines Pleuels mit einer Exzenter-Verstelleinrichtung zur Verstellung einer effektiven Pleuelstangenlänge, welche gewährleistet, dass in einer Schaltstellung für niedrige Verdichtung (ε_{low}) der Brennkraftmaschine das System in einem hydraulisch vorgespannten Zustand vorliegt. Das bedeutet, dass Hydraulikfluid, beispielsweise Motoröl, aus einer größeren Hydraulikkammer auf einer Gaskraftseite (GKS-Hydraulikkammer) des verstellbaren Pleuels direkt in eine kleinere Hydraulikkammer auf einer Massenkraftseite (MKS-Hydraulikkammer) geleitet wird. Dabei kann überschüssiges Öl über eine Drosselstelle in die Lagerschale abgeführt werden.

Gleichzeitig kann für den Schaltvorgang von der niedrigen Verdichtung (ε_{low}) nach der hohen Verdichtung (ε_{high}) gewährleistet werden, dass das System stets mit einer ausreichenden Menge Öl versorgt wird, sodass der Öldruck nicht zu weit einbricht. Ein Druckeinbruch kann direkt zu einem Ausgasen von Luft aus dem Öl führen, wodurch das System die hydraulische Vorspannung verliert. Dies könnte eine Destabilisierung des Exzenterhebelsystems zur Folge haben. Mit dem erfindungsgemäßen Umschaltventil kann vermieden werden, dass der Exzenterhebel während einer Umdrehung der Kurbelwelle eine große Amplitude ausführt, welche zu nahezu ungedämpften Schlägen der Stützkolben auf den Kammerboden oder die Ölsäule führt und schließlich sehr hohe Druckspitzen im System verursacht.

So kann auch vorteilhaft vermieden werden, dass der gesamte Zulauf aus der Versorgungsquelle gedrosselt werden muss, womit auch die Aktuierung des Umschaltventils gedrosselt würde.

Das Umschaltventil stellt einen bistabilen Schalter dar, dessen Funktionsweise einen Stufenkolben mit zwei Endpositionen aufweist, welcher jeweils eine Ablaufbohrung der Hydraulikkammern öffnet oder schließt. Der Ablauf der MKS-Hydraulikkammer wird dabei von dem Umschaltventil gedrosselt, der Ablauf der GKS-Hydraulikkammer ist nicht gedrosselt. Wenn der Galeriedruck der Versorgungsquelle, der an einer ersten Druckfläche des Stufenkolbens bei hoher Verdichtung (ε_{high}) anliegt, einen bestimmten Wert überschreitet, beginnt sich der Stufenkolben zu bewegen. Ab einem bestimmten Weg des Stufenkolbens wird eine zweite Druckfläche hinzugeschaltet und der Stufenkolben springt in die Endposition für niedrige Verdichtung (ε_{low}). Der Druck, um den Stufenkolben wieder zurückzuschalten, liegt wesentlich niedriger als der Druck, der erforderlich war, um den Stufenkolben in die Stellung für niedrige Verdichtung (ε_{low}) zu bewegen. Dadurch entsteht ein Bereich, in dem beide Kolbenpositionen stabil gehalten werden können, welcher als bistabiler Bereich bezeichnet wird.

In der Stellung für hohe Verdichtung (ε_{high}) ist die Ablaufbohrung der MKS-Hydraulikkammer mit der Versorgungsquelle verbunden. Ablaufendes Öl aus der MKS-Hydraulikkammer kann von der GKS-Hydraulikkammer über das Rückschlagventil direkt wieder aufgenommen werden. Ist das MKS-Hydraulikkammervolumen kleiner als das GKS-Hydraulikkammervolumen, wird das Differenzvolumen an Öl über das versorgungsseitige Rückschlagventil nachgefördert. Der Ablauf aus der MKS-Hydraulikkammer erfolgt gedrosselt, um die Verstellgeschwindigkeit von der Stellung für niedrige Verdichtung (ε_{low}) in die Stellung für hohe Verdichtung (ε_{high}) zu begrenzen.

In der Stellung für hohe Verdichtung (ε_{high}) ist die Ablaufbohrung der GKS-Hydraulikkammer verschlossen. Leckageöl, das am Stufenkolben auftreten kann, kann durch Bohrungen in den üblicherweise vorgesehenen Verschlussdeckeln des Umschaltventils in Richtung des Tanks abfließen.

In der Stellung für niedrige Verdichtung (ε_{low}) wird das Öl aus der GKS-Hydraulikkammer auf Grund der Bohrungen im Pleuel direkt ungedrosselt vor das Rückschlagventil der MKS-Hydraulikkammer geleitet. Auf diese Weise kann die Energie, die aus den Druckkräften am Pleuel resultiert, genutzt und vor dem Rückschlagventil der MKS-Hydraulikkammer ein hohes Druckpotential erzeugt werden, welches anschließend auch in der MKS-Hydraulikkammer vorliegt. Dadurch wird die MKS-Hydraulikkammer hydraulisch vorgespannt und die Steifigkeit und/oder Lagestabilität des Pleuels über den Motorzyklus erhöht.

Die hydraulische Anordnung kann vorteilhaft angewendet werden, da die GKS-Hydraulikkammer ein größeres Volumen aufweist als die MKS-Hydraulikkammer. Dadurch entsteht vor dem Rückschlagventil der MKS-Hydraulikkammer immer mehr Öl zu Verfügung als die MKS-Hydraulikkammer aufnehmen kann. Das Differenzvolumen an Öl wird über eine Drossel, die ein ungedrosseltes Ablaufen des Öls aus der GKS-Hydraulikkammer verhindert, in Richtung der Versorgungsquelle abgeleitet. Dadurch kann die Verstellgeschwindigkeit des Pleuels in Richtung der Stellung für niedrige Verdichtung (ε_{low}) begrenzt werden.

Das erfindungsgemäße Umschaltventil weist dafür einen zusätzlichen Kanal zur Versorgung der MKS-Hydraulikkammer auf und ist vorzugsweise als 4/2 Wege-Ventil ausgestaltet. Eingangskanäle des Umschaltventils sind die beiden Ablaufkanäle der GKS-Hydraulikkammer und der MKS-Hydraulikkammer, welche in den zwei Schaltstellung wahlweise auf die Versorgungsquelle und den Zulauf der MKS-Hydraulikkammer geschaltet werden können.

Ein Kammervolumen der zweiten Hydraulikkammer ist kleiner als ein Kammervolumen der ersten Hydraulikkammer und die zweite Hydraulikkammer ist hydraulisch vorspannbar. Beispielsweise kann die GKS-Hydraulikkammer ein größeres Volumen aufweisen als die MKS-Hydraulikkammer. Dadurch entsteht vor dem Rückschlagventil der MKS-Hydraulikkammer immer mehr Öl zu Verfügung als die MKS-Hydraulikkammer aufnehmen kann. Das Differenzvolumen an Öl kann über eine Drossel, die ein ungedrosseltes Ablaufen des Öls aus der GKS-Hydraulikkammer verhindert, in Richtung der Versorgungsquelle abgeleitet werden. Dadurch kann die Verstellgeschwindigkeit des Pleuels in Richtung der Stellung für niedrige Verdichtung (ε_{low}) begrenzt werden.

Gemäß einer vorteilhaften Ausgestaltung kann der Stufenkolben Tankablaufbohrungen aufweisen, welche in der ersten Schaltstellung mit einem Tank verbunden sind, so dass eine erste Druckfläche, insbesondere eine große erste Druckfläche, des Stufenkolbens druckentlastet ist. Wenn der Galeriedruck der Versorgungsquelle, der an einer ersten Druckfläche des Stufenkolbens bei hoher Verdichtung (ε_{high}) anliegt, einen bestimmten Wert überschreitet, beginnt sich der Stufenkolben zu bewegen. Ab einem bestimmten Weg des Stufenkolbens wird eine zweite Druckfläche hinzugeschaltet und der Stufenkolben springt in die Endposition für niedrige Verdichtung (ε_{low}).

Gemäß einer vorteilhaften Ausgestaltung können die Tankablaufbohrungen als Radialbohrungen in dem Stufenkolben ausgebildet sein und/oder können die Tankablaufbohrungen über den Umfang des Stufenkolbens verteilt angeordnet sein. Hierdurch ist es möglich, dass das Umschaltventil die Funktion des bistabilen Schalters günstig erfüllen kann, dessen Funktionsweise einen Stufenkolben mit zwei Endpositionen aufweist, welcher jeweils eine Ablaufbohrung der Hydraulikkammern öffnet oder schließt. Der Ablauf der MKS-Hydraulikkammer kann dabei von dem Umschaltventil gedrosselt, der Ablauf der GKS-Hydraulikkammer nicht gedrosselt erfolgen.

Gemäß einer vorteilhaften Ausgestaltung können die Tankablaufbohrungen mit wenigstens einem Überströmkanal im Gehäuse über eine umlaufende Nut verbindbar sein. Dadurch kann das Öl ungehindert über die Tankablaufbohrungen abfließen.

Gemäß einer vorteilhaften Ausgestaltung kann in der ersten Schaltstellung der wenigstens eine Überströmkanal mit einem Tank verbindbar sein. Auf diese Weise wirkt in der ersten Schaltstellung nur die erste Druckfläche am Stufenkolben, um diesen in Bewegung zu setzen.

Gemäß einer vorteilhaften Ausgestaltung kann in der zweiten Schaltstellung der wenigstens eine Überströmkanal mit einer Versorgungsquelle verbindbar sein. Auf diese Weise können in der zweiten Schaltstellung beide Druckflächen am Stufenkolben wirken, um diesen zu bewegen.

Gemäß einer vorteilhaften Ausgestaltung kann der Stufenkolben über eine Spiralfeder an einem Verschlussdeckel des Gehäuses abgestützt sein. Der Stufenkolben steht so unter der mechanischen Vorspannung durch die Spiralfeder und kann vom Hydraulikdruck auf die Druckflächen gegen diese Vorspannung bewegt werden. Dadurch kann die Funktion des bistabilen Schalters realisiert werden.

Gemäß einer vorteilhaften Ausgestaltung kann der Verschlussdeckel mit dem Gehäuse über Schweißen oder Bördeln oder Einpressen verbunden sein. Durch diese Fügeverfahren ist es möglich, den Verschlussdeckel auf günstige Weise an dem Gehäuse des Umschaltventils zu befestigen.

Gemäß einer vorteilhaften Ausgestaltung kann der Verschlussdeckel Bohrungen aufweisen, welche mit dem Tank verbunden sein. Dadurch ist es möglich, dass Leckageöl, das am Stufenkolben auftritt, in einfacher Weise in Richtung des Tankabflusses abfließen kann.

Gemäß einer vorteilhaften Ausgestaltung kann der Stufenkolben über einen Hydraulikdruck auf eine erste Druckfläche aus der ersten Schaltstellung heraus betätigbar sein. So kann der Stufenkolben, wenn der Hydraulikdruck einen bestimmten vorgegebenen Wert, der durch die Stärke der Spiralfeder festgelegt ist, überschreitet, in Bewegung gesetzt werden.

Gemäß einer vorteilhaften Ausgestaltung kann der Stufenkolben über einen Hydraulikdruck auf die erste Druckfläche und eine zweite Druckfläche in die zweite Schaltstellung betätigbar sein. So kann der Stufenkolben, wenn der Hydraulikdruck einen weiteren bestimmten vorgegebenen Wert, der durch die Stärke der Spiralfeder festgelegt ist, überschreitet, in seine Endposition in der zweiten Schaltstellung springen.

Gemäß einer vorteilhaften Ausgestaltung kann in dem Ablauf des zweiten Zylinders eine Drosselstelle angeordnet sein. Auf diese Weise kann die Verstellgeschwindigkeit des Pleuels in Richtung niedriger Verdichtung (ε_{low}) begrenzt werden.

Gemäß einer vorteilhaften Ausgestaltung kann das Umschaltventil als hydraulisch betätigbares 4/2-Wege-Ventil ausgebildet sein. Eingangskanäle des Umschaltventils sind die beiden Ablaufkanäle der GKS-Hydraulikkammer und der MKS-Hydraulikkammer, welche in den zwei Schaltstellung wahlweise auf die Versorgungsquelle und den Zulauf der MKS-Hydraulikkammer geschaltet werden können.

Erfindungsgemäß wird ein Pleuel für eine Brennkraftmaschine mit variabler Verdichtung mit einer Exzenter-Verstelleinrichtung zur Verstellung einer effektiven Pleuelstangenlänge vorgeschlagen. Dabei wird das Pleuel wie vorstehend beschrieben verwendet. Die Exzenter-Verstelleinrichtung weist wenigstens einen ersten Zylinder und einen zweiten Zylinder mit Hydraulikkammern auf und es sind sowohl jeweils ein Zulauf zum Zuführen von Hydraulikflüssigkeit in die Zylinder aus einer Versorgungsquelle als auch jeweils ein Ablauf zum Abführen von Hydraulikflüssigkeit von den Zylindern vorgesehen. Das Umschaltventil weist einen in einem Gehäuse beweglichen Stufenkolben auf, welcher wahlweise in eine erste Schaltstellung oder eine zweite Schaltstellung verlagerbar ist. In der ersten Schaltstellung ist der Ablauf des zweiten Zylinders und in der zweiten Schaltstellung der Ablauf des ersten Zylinders mit der Versorgungsquelle verbunden. Den Zylindern ist jeweils ein Rückschlagventil zugeordnet, welches ein Zuführen von Hydraulikflüssigkeit in die Zylinder ermöglicht und ein Abführen von Hydraulikflüssigkeit von den Zylindern verhindert. Die Zylinder sind derart verbunden, dass in der zweiten Schaltstellung Hydraulikflüssigkeit aus dem ersten Zylinder in den zweiten Zylinder direkt und ungedrosselt über das Umschaltventil leitbar ist.

Dadurch kann ein vorteilhafter Verbrennungsprozess und damit niedrigerer Kraftstoffverbrauch in der Brennkraftmaschine umgesetzt werden.

### Kurze Beschreibung der Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Draufsicht eines erfindungsgemäßen Pleuels mit eingezeichneter Schnittebene B-B;
- Fig. 2: einen Längsschnitt entlang der Schnittebene B-B durch den Pleuel gemäß Fig. 1;
- Fig. 3: eine erste Seitenansicht eines erfindungsgemäßen Umschaltventils mit eingezeichneter Schnittebene C-C;
- Fig. 4: eine zweite Seitenansicht des erfindungsgemäßen Umschaltventils gemäß Fig. 1 mit eingezeichneten Schnittebenen A-A und B-B;
- Fig. 5: einen Längsschnitt entlang der Schnittebene A-A des Umschaltventils gemäß Fig. 4 in einer ersten Schaltstellung;
- Fig. 6: einen Längsschnitt entlang der Schnittebene B-B des Umschaltventils gemäß Fig. 4 in einer ersten Schaltstellung;
- Fig. 7: eine isometrische entlang der Schnittebene C-C teilgeschnittene Ansicht des Umschaltventils gemäß Fig. 3 in einer ersten Schaltstellung;
- Fig. 8: den Längsschnitt entlang der Schnittebene A-A des Umschaltventils gemäß Fig. 4 an einer Schaltschwelle;
- Fig. 9: den Längsschnitt entlang der Schnittebene B-B des Umschaltventils gemäß Fig. 4 an einer Schaltschwelle;
- Fig. 10: den Längsschnitt entlang der Schnittebene A-A des Umschaltventils gemäß Fig. 4 in einer zweiten Schaltstellung;
- Fig. 11: den Längsschnitt entlang der Schnittebene B-B des Umschaltventils gemäß Fig. 4 in einer zweiten Schaltstellung;
- Fig. 12: einen hydraulischen Schaltplan des erfindungsgemäßen Pleuels mit dem Umschaltventil gemäß den Figuren 3 bis 11 in der ersten Schaltstellung und
- Fig. 13: den hydraulischen Schaltplan des erfindungsgemäßen Pleuels mit dem Umschaltventil gemäß den Figuren 3 bis 11 in der zweiten Schaltstellung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

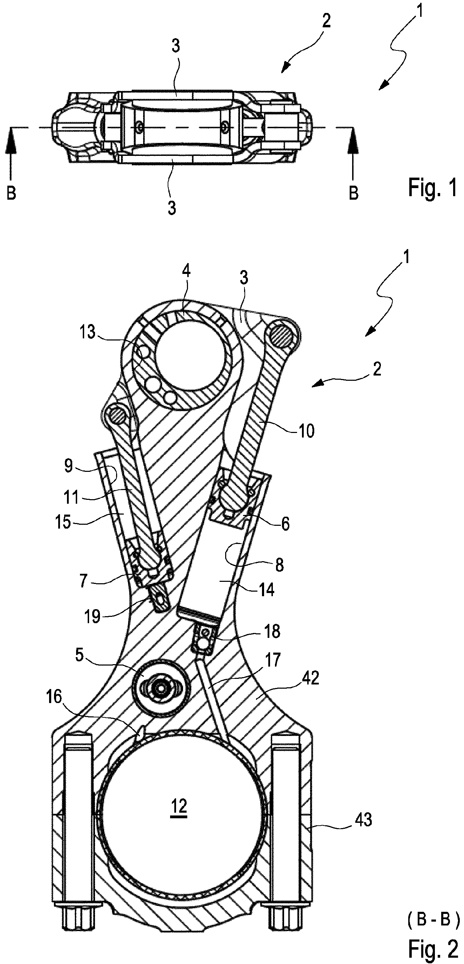

Der erfindungsgemäße Pleuel 1 für eine Brennkraftmaschine mit variabler Verdichtung ist beispielhaft den Figuren 1 (Draufsicht) und 2 (Längsschnitt in der Schnittebene B-B) zu entnehmen. Dieses weist eine Exzenter-Verstelleinrichtung 2 zur Verstellung einer effektiven Pleuelstangenlänge auf, welche als Abstand der Mittelachse eines Hublagerauges 12 von der Mittelachse der Bohrung eines in einem Pleuellagerauge 13 angeordneten Exzenters 4 definiert ist. Die Exzenter-Verstelleinrichtung 2 weist den mit einem ein oder mehrteiligen Exzenterhebel 3 zusammenwirkenden Exzenter 4 auf, in welchem ein nicht gezeigter Kolbenbolzen eines Zylinderkolbens aufgenommen ist. Ein Verstellweg der Exzenter-Verstelleinrichtung 2 ist mittels eines Umschaltventils 5 hydraulisch verstellbar.

Das Umschaltventil 5 dient zum Steuern eines Hydraulikflüssigkeitsstroms des Pleuels 1 mit der Exzenter-Verstelleinrichtung 2 zur Verstellung einer effektiven Pleuelstangenlänge. Die Exzenter-Verstelleinrichtung weist dazu wenigstens einen ersten Zylinder und einen zweiten Zylinder mit Hydraulikkammern 14, 15 auf. Sowohl jeweils ein Zulauf 16, 17 zum Zuführen von Hydraulikflüssigkeit in die Zylinder aus einer Versorgungsquelle P als auch jeweils ein Ablauf 20, 21 zum Abführen von Hydraulikflüssigkeit von den Zylindern sind dabei vorgesehen. Das Umschaltventil 5 weist einen in einem Gehäuse 34 beweglichen Stufenkolben 28 auf, welcher wahlweise in eine erste Schaltstellung S1 oder eine zweite Schaltstellung S2 verlagerbar ist. In der ersten Schaltstellung S1 ist der Ablauf 21 des zweiten Zylinders und in der zweiten Schaltstellung S2 der Ablauf 20 des ersten Zylinders mit der Versorgungsquelle P verbunden. Den Zylindern ist jeweils ein Rückschlagventil 18, 19 zugeordnet, welches ein Zuführen von Hydraulikflüssigkeit in die Zylinder ermöglicht und ein Abführen von Hydraulikflüssigkeit von den Zylindern verhindert.

Die Zylinder sind derart verbunden, dass in der zweiten Schaltstellung S2 Hydraulikflüssigkeit aus dem ersten Zylinder in den zweiten Zylinder direkt und ungedrosselt über das Umschaltventil 5 leitbar ist.

Ein Kammervolumen der zweiten Hydraulikkammer 15 ist kleiner als ein Kammervolumen der ersten Hydraulikkammer 14, wodurch die zweite Hydraulikkammer 15 hydraulisch vorspannbar ist.

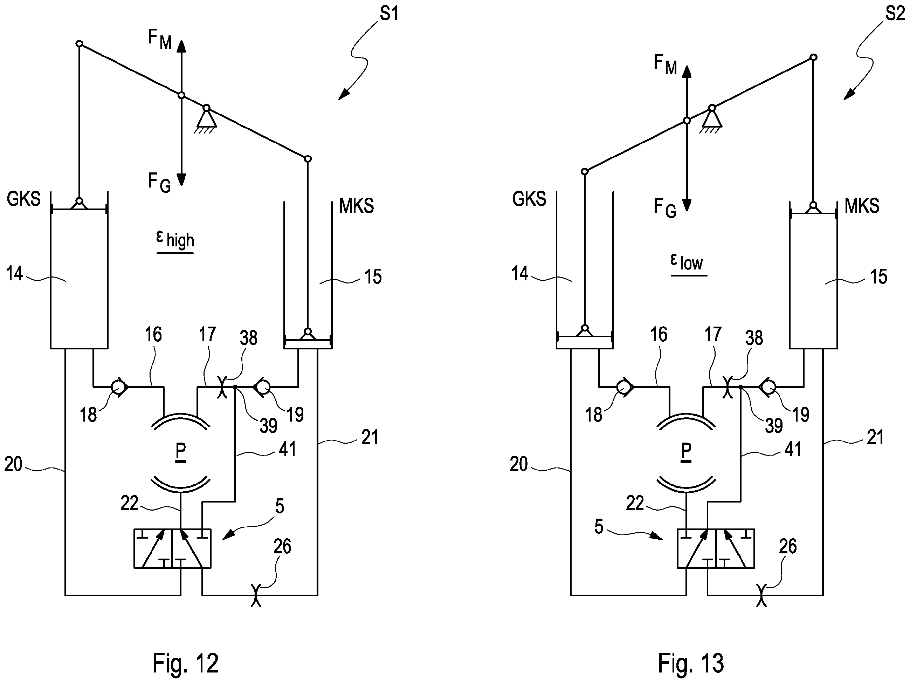

Eine Verdrehung der verstellbaren Exzenter-Verstelleinrichtung 2 wird durch Einwirken von Massenkräften (in den Figuren 12 und 13 mit F_{M} bezeichnet) und Gaslastkräften (in den Figuren 12 und 13 mit F_{G} bezeichnet) der Brennkraftmaschine initiiert, die bei einem Arbeitstakt der Brennkraftmaschine auf die Exzenter-Verstelleinrichtung 2 wirken. Während eines Arbeitstaktes verändern sich die Wirkungsrichtungen der auf die Exzenter-Verstelleinrichtung 2 wirkenden Kräfte kontinuierlich. Die Drehbewegung oder Verstellbewegung wird durch einen oder mehrere mit Hydraulikflüssigkeit, insbesondere mit Motoröl, beaufschlagte, im Pleuel 1 integrierte Kolben 6, 7 unterstützt, bzw. die Kolben 6, 7 verhindern ein Rückstellen der Exzenter-Verstelleinrichtung 2 aufgrund variierender Kraftwirkungsrichtungen der auf die Exzenter-Verstelleinrichtung 2 wirkenden Kräfte.

Die Kolben 6, 7 sind jeweils in Zylinderbohrungen 8, 9 von Hydraulikzylindern des Pleuels 1 verschiebbar geführt und mit Stützstangen 10, 11 verbunden, welche ihrerseits mit dem Exzenterhebel 3 gelenkig verbunden sind.

Der Pleuel 1 weist das Hublagerauge 12 zur Anbindung des Pleuels 1 an eine Kurbelwelle einer Brennkraftmaschine sowie ein Pleuellagerauge 13 zur Anbindung des Pleuels 1 an den Zylinderkolben der Brennkraftmaschine auf.

Die Kolben 6, 7 sind in den durch die Zylinderbohrungen 8, 9 gebildeten Hydraulikkammern 14, 15 verschiebbar angeordnet und über Zuläufe 16, 17 von dem Hublagerauge 12 aus mit Hydraulikflüssigkeit, beispielsweise Motoröl über Rückschlagventile 18, 19 beaufschlagt. Diese verhindern dabei ein Rückfließen der Hydraulikflüssigkeit aus den Hydraulikkammern 14, 15 zurück in die Zuläufe 16, 17, ermöglichen jedoch ein Nachsaugen von Hydraulikflüssigkeit in die Hydraulikkammern 14, 15.

Die Hydraulikkammern 14, 15 sind weiter über in den hydraulischen Schaltplänen des Pleuels 1 in den Figuren 12 und 13 dargestellten Abläufe 20, 21 mit dem Umschaltventil 5 verbunden, welches als Hydraulikventil ausgebildet ist und über eine Ablaufleitung 22 mit dem Hublagerauge 12 bzw. einer Lagerschale verbunden ist.

Wie beispielsweise aus Figur 2 ersichtlich ist, weist der Pleuel 1 einen Pleuelkörper 42 und einen daran befestigten Pleueldeckel 43 auf.

Die Zylinderbohrung 8 stellt die Hydraulikkammer 14 auf der Gaskraftseite (GKS) des Pleuels 1 dar, während die Zylinderbohrung 9 die Hydraulikkammer 15 auf der Massenkraftseite (MKS) des Pleuels 1 darstellt.

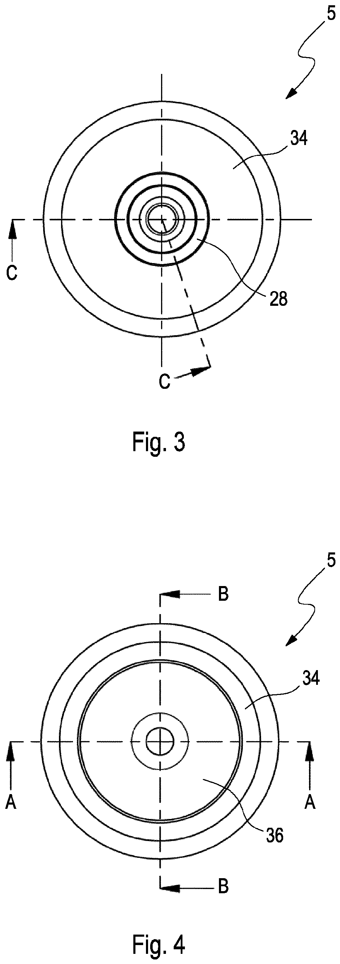

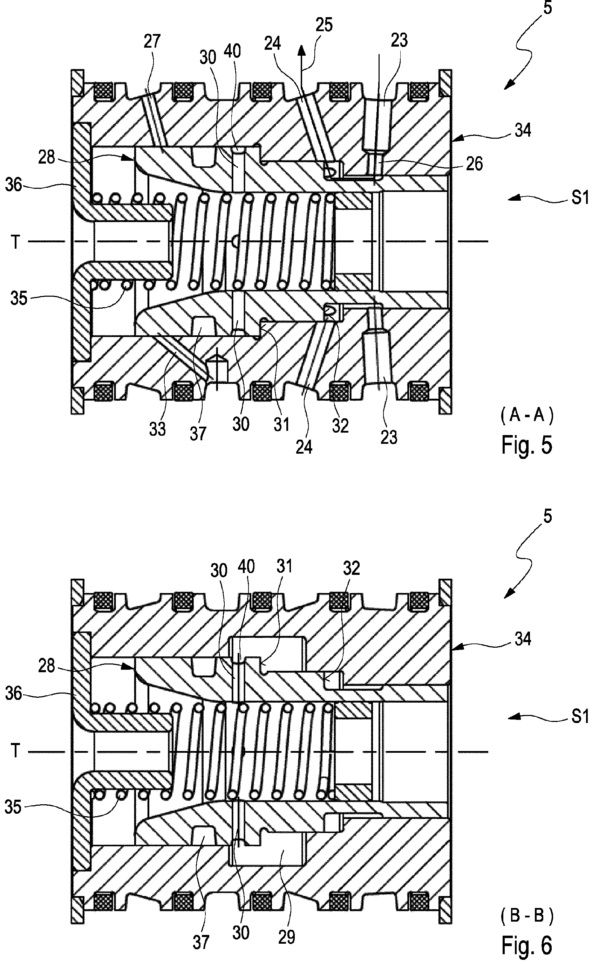

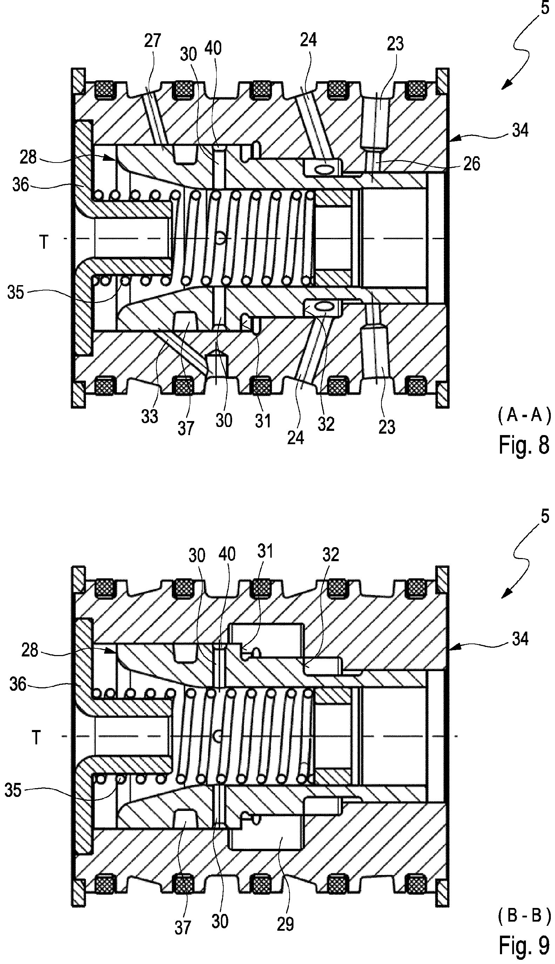

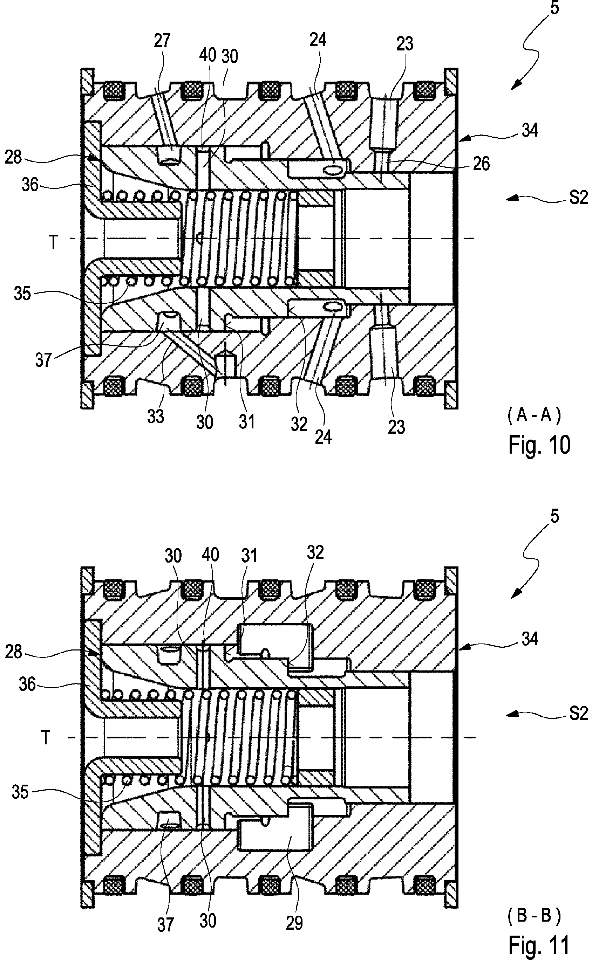

Den Figuren 3 bis 11 ist ein erfindungsgemäßes Umschaltventil 10 in verschiedenen Darstellungen und Schnitten zu entnehmen. Dabei zeigen die Figuren 5 bis 7 das Umschaltventil 5 in einer ersten Schaltstellung S1 für hohe Verdichtung (ε_{high}) und die Figuren 10 und 11 in einer zweiten Schaltstellung S2 für niedrige Verdichtung (ε_{low}). Die Figuren 8 und 9 zeigen die Schnitte an einer Schaltschwelle zwischen den beiden Schaltstellungen. Entsprechende hydraulische Schaltpläne eines erfindungsgemäßen Pleuels 1 sind den Figuren 12 und 13 zu entnehmen.

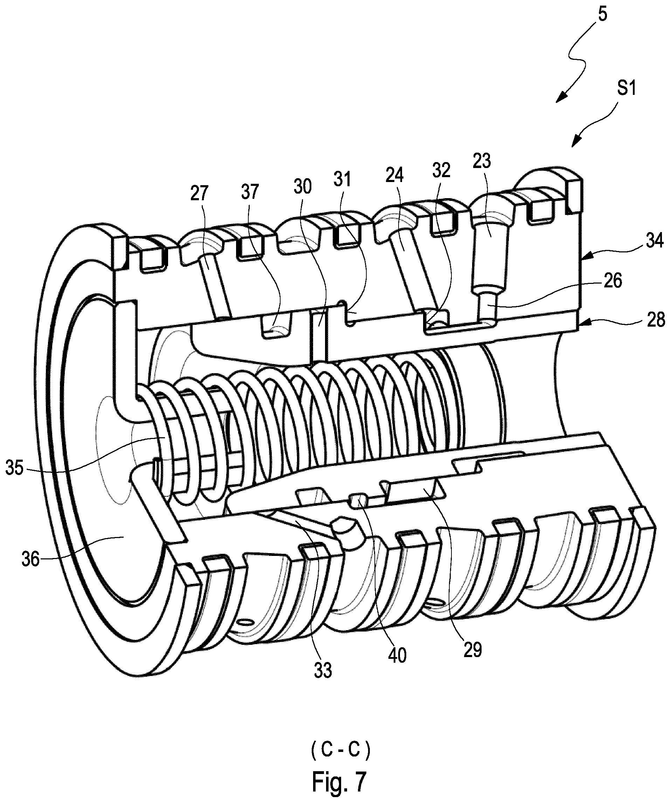

Figur 3 zeigt eine erste Seitenansicht des Umschaltventils 5 mit eingezeichneter Schnittebene C-C, Figur 4 eine zweite Seitenansicht mit eingezeichneten Schnittebenen A-A und B-B. Die Figuren 5 und 6 zeigen die entsprechenden Längsschnitte A-A und B-B, während Figur 7 eine teilgeschnittene isometrische Darstellung mit dem Schnitt C-C zeigt.

In der Schaltstellung S1 des Pleuels 1 für hohe Verdichtung (ε_{high}) ist die GKS-Hydraulikkammer 14 mit Hydraulikflüssigkeit/Öl gefüllt und die MKS-Hydraulikkammer 15 über den Ablauf 21 sowie über das Umschaltventil 5 gedrosselt mit einer Versorgungsquelle P bzw. der Lagerschale des Pleuels 1 verbunden.

Eine bzw. mehrere MKS-Ablaufbohrungen 23 des Umschaltventils 5 sind mit der einer bzw. mehreren Versorgungsbohrungen 24 verbunden, wie durch den Pfeil 25 der Hydraulikströmung in Figur 5 angedeutet ist. Eine Drossel 26 ist dabei im Umschaltventil 5 als Durchmesserverengung der Ablaufbohrung 23 ausgebildet. Die Ablaufbohrung 23 ist bei im Pleuel 1 eingebautem Umschaltventil 5 mit dem Ablauf 21 der MKS-Hydraulikkammer verbunden. Ablaufendes Öl aus der MKS-Hydraulikkammer kann von der GKS-Hydraulikkammer 14 über das Rückschlagventil 18 direkt aus Versorgungsquelle P wieder aufgenommen werden.

Eine bzw. mehrere GKS-Ablaufbohrungen 27 sind durch einen in einem Gehäuse 34 längsverschieblich angeordneten Stufen-Kolben 28 des Umschaltventils 5 geschlossen. Eine MKS-Zulaufbohrung 33 ist ebenfalls durch den Stufen-Kolben 28 verschlossen.

Der Stufen-Kolben 28 wird durch eine Spiralfeder 35, welche an einem Verschlussdeckel 36 des Gehäuses 34 abgestützt ist, in Richtung einer ersten, rechten Endstellung vorgespannt. Der Verschlussdeckel 36 selbst kann mit dem Gehäuse 34 über Schweißen oder Bördeln oder Einpressen oder ein ähnlich geeignetes Fügeverfahren verbunden sein. Der Verschlussdeckel 36 weist weiter (nicht dargestellte) Bohrungen auf, welche mit dem Tank T verbunden sind, damit Leckageöl aus dem Stufenkolben 28 abfließen kann.

Die grundsätzliche Funktion des Umschaltventils 5, welches hydraulisch betätigbar ist, ist bereits aus der DE 10 2013 107 127 A1 bekannt.

Wie aus dem Schnitt B-B in Figur 6 ersichtlich ist, sind mit der Versorgungsquelle P verbundene Überströmkanäle 29 über radiale Tankablaufbohrungen 30 in Richtung eines Tanks T entlastet, so dass Leckageöl, welches am Stufen-Kolben 28 auftreten kann, durch eine oder mehrere Bohrungen in einem Verschlussdeckel 36 abfließen kann. Auf eine große, ringförmige Druckfläche 31 des Stufenkolbens 28 wirkt somit kein Druck. Lediglich auf eine kleine ringförmige Druckfläche 32 wirkt der hydraulische Druck der Versorgungsquelle P, wodurch der Stufen-Kolben 28 nicht gegen die Kraft der Spiralfeder 35 in eine zweite Endstellung verschoben werden kann.

Die Tankablaufbohrungen 30 sind als Radialbohrungen in dem Stufenkolben 28 ausgebildet. Zweckmäßigerweise sind dabei die Tankablaufbohrungen 30 über den Umfang des Stufenkolbens 28 verteilt angeordnet. Die Tankablaufbohrungen 30 sind weiter mit wenigstens einem Überströmkanal 29 im Gehäuse 34 über eine umlaufende Nut 40 hydraulisch verbindbar.

In den Figuren 8 und 9 sind Längsschnitte entlang der Schnittebene A-A und B-B nach Figur 4 des Umschaltventils 5 an einer Schaltschwelle dargestellt. Die Figuren 10 und 11 zeigen die entsprechenden Längsschnitte des Umschaltventils 5 in der zweiten Schaltstellung S2.

An der in den Figuren 8 und 9 gezeigten Schaltschwelle befinden sich die Tankablaufbohrungen 30 außerhalb der Überströmkanäle 29, so dass sich auch an der großen Druckfläche 31 ein Druck aufbauen und sich der Stufen-Kolben 28 in seine zweite Endlage sprunghaft nach links verschieben kann. Das Umschaltventil 5 befindet sich dann in seiner zweiten Schaltstellung S2 für niedrige Verdichtung (ε_{low}), welche in den Figuren 10 und 11 dargestellt ist. Die entsprechende Stellung des Pleuels 1 ist aus Figur 2 sowie dem Schaltplan gemäß Figur 13 ersichtlich.

In dieser Stellung drückt die GKS-Hydraulikkammer 14 ihr Öl über das Umschaltventil 5 direkt ungedrosselt vor das MKS-Rückschlagventil 19. Die GKS-Ablaufbohrungen 27 sind dabei über einen Ringkanal 37 im Stufen-Kolben 28 mit der MKS-Zulaufbohrung 33 verbunden. Die MKS-Ablaufbohrungen 23 sind verschlossen. Beide Druckflächen 31,32 sind im Bereich der Überströmkanäle 29 angeordnet und daher mit Druck beaufschlagt. Die Tankablaufbohrungen 30 sind ebenfalls verschlossen.

Da die GKS-Hydraulikkammer 14 ein größeres Kammervolumen als die MKS-Hydraulikkammer 15 aufweist, wird der überschüssige Volumenstrom Richtung Versorgungsquelle P, beispielsweise die Lagerschale des Pleuels 1, durch eine Drossel 38 geleitet. Der dabei entstehende Druck ist bei richtiger Dimensionierung der Drossel 38 wesentlich höher als der Versorgungsdruck und liegt in der vorliegenden Erfindung auch vor dem Rückschlagventil 19 der MKS-Hydraulikkammer 15 an, womit ein sicheres Befüllen der MKS-Hydraulikkammer 15 gewährleistet wird. Auf diese Weise ist die hydraulische Vorspannung gewährleistet. Gleichzeitig bewirkt die Drossel 38 eine Begrenzung der Geschwindigkeit, mit welcher der GKS-Kolben 6 auf dem Kammerboden der GKS-Hydraulikkammer 8 auftrifft. Für die hydraulische Vorspannung der MKS-Hydraulikkammer 15 in der Schaltstellung (ε_{low}) ist es wichtig, dass die Drossel 38 im von der GKS-Hydraulikkammer 14 in Richtung der Versorgungsquelle P ausgeschobenen Volumenstrom stromabwärts eines Verzweigungspunktes 39 (siehe Figur 13) zum MKS-Hydraulikkammer-Rückschlagventil 19 liegt. Die Drossel 38 ist demzufolge zwischen dem Verzweigungspunkt 39 und der Versorgungsquelle P angeordnet.

Der hydraulische Druck, um den Stufen-Kolben 28 wieder in die erste Schaltstellung S1 zurückzuschalten, ist wesentlich niedriger als der Druck, welcher erforderlich ist, um den Stufen-Kolben 28 in die zweiten Schaltstellung S2 zu bewegen. Durch diese Hysterese entsteht ein hydraulischer Druckbereich, in dem beide Kolbenpositionen stabil gehalten werden. Das erfindungsgemäße Umschaltventil 5 stellt also ein bistabiles Umschaltventil dar.

In den Figuren 12 und 13 ist ein hydraulischer Schaltplan des erfindungsgemäßen Pleuels 1 mit dem Umschaltventil 5 gemäß den Figuren 3 bis 11 in der ersten Schaltstellung S1 und der zweiten Schaltstellung S2 dargestellt.

Wie aus den Figuren 12 und 13 ersichtlich ist, ist das gezeigte und beschriebene Umschaltventil 5 als 4/2-Wege-Ventil ausgebildet. Eingangskanäle des Umschaltventils 5 sind die beiden Ablaufkanäle 20 und 21 der GKS-Hydraulikkammer 14, bzw. der MKS-Hydraulikkammer 15, welche in den zwei Schaltstellungen S1 und S2 wahlweise auf die Versorgungsquelle P und den Zulauf 41 der MKS-Hydraulikkammer 15 geschaltet werden können.

In der in Figur 12 gezeigten Schaltstellung des Umschaltventils 5 befindet sich der Pleuel 1 in der Schaltstellung S1 für hohe Verdichtung (ε_{high}). In diesem Betriebszustand ist die GKS-Hydraulikkammer 14 mit Hydraulikflüssigkeit/Öl gefüllt und die MKS-Hydraulikkammer 15 ist über den Ablauf 21 sowie über das Umschaltventil 5 gedrosselt mit einer Versorgungsquelle P bzw. der Lagerschale des Pleuels 1 verbunden.

Der Stufenkolben 28 des Umschaltventils 5 weist, wie beispielsweise in Figur 6 dargestellt, Tankablaufbohrungen 30 auf, welche in der ersten Schaltstellung S1 mit dem Tank T verbunden sind, so dass eine erste Druckfläche 31, insbesondere eine große erste Druckfläche 31, des Stufenkolbens 28 druckentlastet ist. In der ersten Schaltstellung S1 ist dazu der wenigstens eine Überströmkanal 29 mit dem Tank T verbunden. So kann der Stufenkolben 28 heraus über den Hydraulikdruck auf die erste Druckfläche 31 betätigt werden, indem der Hydraulikdruck die Vorspannkraft der Spiralfeder 35 überdrückt. In die zweite Schaltstellung S2 kann der Stufenkolben 28 über den Hydraulikdruck auf die erste Druckfläche 31 und eine zweite Druckfläche 32 gebracht werden.

In der in Figur 13 gezeigten Schaltstellung des Umschaltventils 5 befindet sich der Pleuel 1 in der Schaltstellung S2 für niedrige Verdichtung (ε_{low}). In diesem Betriebszustand ist die GKS-Hydraulikkammer 14 über den Ablauf 20 sowie über das Umschaltventil 5 und den Zulauf 41 mit der MKS-Hydraulikkammer 15 verbunden und deshalb die MKS-Hydraulikkammer 15 mit Hydraulikflüssigkeit/Öl gefüllt.

In der zweiten Schaltstellung S2 ist der wenigstens eine Überströmkanal 29 mit der Versorgungsquelle P verbunden.

## Patentansprüche

1. Pleuel (1) für eine Brennkraftmaschine mit variabler Verdichtung mit einer Exzenter-Verstelleinrichtung (2) zur Verstellung einer effektiven Pleuelstangenlänge mit einem Umschaltventil (5) zum Steuern eines Hydraulikflüssigkeitsstroms des Pleuels (1),
wobei die Exzenter-Verstelleinrichtung wenigstens einen ersten Zylinder und einen zweiten Zylinder mit Hydraulikkammern (14, 15) aufweist und wobei sowohl jeweils ein Zulauf (16, 17) zum Zuführen von Hydraulikflüssigkeit in die Zylinder aus einer Versorgungsquelle (P) als auch jeweils ein Ablauf (20, 21) zum Abführen von Hydraulikflüssigkeit von den Zylindern vorgesehen sind,
wobei das Umschaltventil (5) einen in einem Gehäuse (34) beweglichen Stufenkolben (28) aufweist, welcher wahlweise in eine erste Schaltstellung (S1) oder eine zweite Schaltstellung (S2) verlagerbar ist,
wobei in der ersten Schaltstellung (S1) der Ablauf (21) des zweiten Zylinders und in der zweiten Schaltstellung (S2) der Ablauf (20) des ersten Zylinders mit der Versorgungsquelle (P) verbunden ist,
wobei den Zylindern jeweils ein Rückschlagventil (18, 19) zugeordnet ist, welches ein Zuführen von Hydraulikflüssigkeit in die Zylinder ermöglicht und ein Abführen von Hydraulikflüssigkeit von den Zylindern verhindert,
wobei die Zylinder derart verbunden sind, dass in der zweiten Schaltstellung (S2) Hydraulikflüssigkeit aus dem ersten Zylinder in den zweiten Zylinder direkt und ungedrosselt über das Umschaltventil (5) leitbar ist, wobei ein Kammervolumen der zweiten Hydraulikkammer (15) kleiner als ein Kammervolumen der ersten Hydraulikkammer (14) ist, **dadurch gekennzeichnet, dass** eine Drossel (38) vorgesehen ist, über welche in der zweiten Schaltstellung (S2) ein überschüssiger Volumenstrom in Richtung Versorgungsquelle (P) gedrosselt abläuft, so dass die zweite Hydraulikkammer (15) hydraulisch vorspannbar ist, und in der zweiten Schaltstellung (S2) Hydraulikflüssigkeit aus dem ersten Zylinder in den zweiten Zylinder direkt und ungedrosselt über einen Ringkanal (37) des Stufenkolbens (28) leitbar ist.

2. Pleuel (1) nach Anspruch 1, wobei der Stufenkolben (28) Tankablaufbohrungen (30) aufweist, welche in der ersten Schaltstellung (S1) mit einem Tank (T) verbunden sind, so dass eine erste Druckfläche (31), insbesondere eine große erste Druckfläche (31), des Stufenkolbens (28) druckentlastet ist.

3. Pleuel (1) nach Anspruch 2, wobei die Tankablaufbohrungen (30) als Radialbohrungen in dem Stufenkolben (28) ausgebildet sind und/oder wobei die Tankablaufbohrungen (30) über den Umfang des Stufenkolbens (28) verteilt angeordnet sind.

4. Pleuel (1) nach einem Ansprüche 2 bis 3, wobei die Tankablaufbohrungen (30) mit wenigstens einem Überströmkanal (29) im Gehäuse (34) über eine umlaufende Nut (40) verbindbar sind.

5. Pleuel (1) nach Anspruch 4, wobei in der ersten Schaltstellung (S1) der wenigstens eine Überströmkanal (29) mit einem Tank (T) verbindbar ist.

6. Pleuel (1) nach Anspruch 4 oder 5, wobei in der zweiten Schaltstellung (S2) der wenigstens eine Überströmkanal (29) mit einer Versorgungsquelle (P) verbindbar ist.

7. Pleuel (1) nach einem der vorhergehenden Ansprüche, wobei der Stufenkolben (28) über eine Spiralfeder (35) an einem Verschlussdeckel (36) des Gehäuses (34) abgestützt ist.

8. Pleuel (1) nach Anspruch 7, wobei der Verschlussdeckel (36) mit dem Gehäuse (34) über Schweißen oder Bördeln oder Einpressen verbunden ist.

9. Pleuel (1) nach Anspruch 7 oder 8, wobei der Verschlussdeckel (36) Bohrungen aufweist, welche mit dem Tank (T) verbunden sind.

10. Pleuel (1) nach einem der vorhergehenden Ansprüche, wobei der Stufenkolben (28) über einen Hydraulikdruck auf eine erste Druckfläche (31) aus der ersten Schaltstellung (S1) heraus betätigbar ist.

11. Pleuel (1) nach Anspruch 11, wobei der Stufenkolben (28) über einen Hydraulikdruck auf die erste Druckfläche (31) und eine zweite Druckfläche (32) in die zweite Schaltstellung (S2) betätigbar ist.

12. Pleuel (1) nach einem der vorhergehenden Ansprüche, wobei in dem Ablauf (21) des zweiten Zylinders eine Drosselstelle (26) angeordnet ist.

13. Pleuel (1) nach einem der vorhergehenden Ansprüche, wobei das Umschaltventil (5) als hydraulisch betätigbares 4/2-Wege-Ventil ausgebildet ist.

## Claims

1. Connecting rod (1) for an internal combustion engine with variable compression, having an eccentric adjustment device (2) for adjusting an effective connecting rod length, with a switchover valve (5) for controlling a hydraulic fluid flow of the connecting rod (1),
wherein the eccentric adjustment device has at least one first cylinder and one second cylinder with hydraulic chambers (14, 15), and wherein both in each case one inlet (16, 17) for the feed of hydraulic fluid into the cylinders from a supply source (P) and in each case one outlet (20, 21) for the discharge of hydraulic fluid from the cylinders are provided,
wherein the switchover valve (5) has a stepped piston (28) which is movable in a housing (34) and which is selectively displaceable into a first switching position (S1) or a second switching position (S2),
wherein, in the first switching position (S1), the outlet (21) of the second cylinder, and in the second switching position (S2), the outlet (20) of the first cylinder, is connected to the supply source (P),
wherein the cylinders are assigned in each case one check valve (18, 19) which permits a feed of hydraulic fluid into the cylinders and which prevents a discharge of hydraulic fluid from the cylinders,
wherein the cylinders are connected such that, in the second switching position (S2), hydraulic fluid can be conducted from the first cylinder into the second cylinder directly and in unthrottled fashion via the switchover valve (5), wherein a chamber volume of the second hydraulic chamber (15) is smaller than a chamber volume of the first hydraulic chamber (14), **characterized in that** a throttle (38) is provided via which, in the second switching position (S2), an excess volume flow flows out in throttled fashion in the direction of the supply source (P), such that the second hydraulic chamber (15) can be hydraulically preloaded, and in the second switching position (S2), hydraulic fluid can be conducted from the first cylinder into the second cylinder directly and in unthrottled fashion via an annular channel (37) of the stepped piston (28).

2. Connecting rod (1) according to Claim 1, wherein the stepped piston (28) has tank outlet bores (30) which, in the first switching position (S1), are connected to a tank (T) such that a first pressure surface (31), in particular a large first pressure surface (31), of the stepped piston (28) is relieved of pressure.

3. Connecting rod (1) according to Claim 2, wherein the tank outlet bores (30) are formed as radial bores in the stepped piston (28), and/or wherein the tank outlet bores (30) are arranged so as to be distributed over the circumference of the stepped piston (28).

4. Connecting rod (1) according to either of Claims 2 and 3, wherein the tank outlet bores (30) are connectable to at least one flow transfer channel (29) in the housing (34) via an encircling groove (40) .

5. Connecting rod (1) according to Claim 4, wherein, in the first switching position (S1), the at least one flow transfer channel (29) is connectable to a tank (T).

6. Connecting rod (1) according to Claim 4 or 5, wherein, in the second switching position (S2), the at least one flow transfer channel (29) is connectable to a supply source (P).

7. Connecting rod (1) according to any of the preceding claims, wherein the stepped piston (28) is supported by a spiral spring (35) on a closure cover (36) of the housing (34).

8. Connecting rod (1) according to Claim 7, wherein the closure cover (36) is connected to the housing (34) by welding or flanging or pressing-in.

9. Connecting rod (1) according to Claim 7 or 8, wherein the closure cover (36) has bores which are connected to the tank (T).

10. Connecting rod (1) according to any of the preceding claims, wherein the stepped piston (28) is actuatable out of the first switching position (S1) by means of a hydraulic pressure on a first pressure surface (31).

11. Connecting rod (1) according to Claim 11, wherein the stepped piston (28) is actuatable into the second switching position (S2) by means of a hydraulic pressure on the first pressure surface (31) and a second pressure surface (32).

12. Connecting rod (1) according to any of the preceding claims, wherein a throttle point (26) is arranged in the outlet (21) of the second cylinder.

13. Connecting rod (1) according to any of the preceding claims, wherein the switchover valve (5) is designed as a hydraulically actuatable 4/2 directional valve.

## Revendications

1. Bielle (1) pour un moteur à combustion interne à compression variable, comprenant un dispositif de réglage excentrique (2) pour le réglage d'une longueur de tige de bielle effective, avec une soupape d'inversion (5) pour commander un flux de liquide hydraulique de la bielle (1),
le dispositif de réglage excentrique présentant au moins un premier cylindre et un deuxième cylindre avec des chambres hydrauliques (14, 15), à chaque fois une entrée (16, 17) pour l'alimentation des cylindres en liquide hydraulique à partir d'une source d'alimentation (P) ainsi qu'à chaque fois une sortie (20, 21) pour l'évacuation de liquide hydraulique hors des cylindres étant prévues,
la soupape d'inversion (5) présentant un piston étagé (28) déplaçable dans un boîtier (34), lequel peut être déplacé de manière sélective dans une première position de commutation (S1) ou une deuxième position de commutation (S2),
dans la première position de commutation (S1), la sortie (21) du deuxième cylindre étant connectée à la source d'alimentation (P) et dans la deuxième position de commutation (S2), la sortie (20) du premier cylindre étant connectée à la source d'alimentation (P),
un clapet antiretour (18, 19) étant à chaque fois associé aux cylindres, lequel permet une alimentation des cylindres en liquide hydraulique et empêche une évacuation de liquide hydraulique hors des cylindres,
les cylindres étant connectés de telle sorte que dans la deuxième position de commutation (S2), du liquide hydraulique puisse être guidé hors du premier cylindre dans le deuxième cylindre directement et sans étranglement par le biais de la soupape d'inversion (5), un volume de chambre de la deuxième chambre hydraulique (15) étant inférieur à un volume de chambre de la première chambre hydraulique (14), **caractérisée en ce qu'**un étranglement (38) est prévu, par le biais duquel, dans la deuxième position de commutation (S2), un débit volumique excessif s'écoule sous forme étranglée dans la direction de la source d'alimentation (P), de telle sorte que la deuxième chambre hydraulique (15) puisse être précontrainte hydrauliquement, et dans la deuxième position de commutation (S2), du liquide hydraulique puisse être guidé hors du premier cylindre dans le deuxième cylindre directement et sans étranglement par le biais d'un canal annulaire (37) du piston étagé (28).

2. Bielle (1) selon la revendication 1, dans laquelle le piston étagé (28) présente des alésages de sortie de réservoir (30), qui sont connectés dans la première position de commutation (S1) à un réservoir (T), de telle sorte qu'une première surface de pression (31), en particulier une grande première surface de pression (31) du piston étagé (28), soit déchargée en pression.

3. Bielle (1) selon la revendication 2, dans laquelle les alésages de sortie de réservoir (30) sont réalisés sous forme d'alésages radiaux dans le piston étagé (28) et/ou dans laquelle les alésages de sortie de réservoir (30) sont disposés de manière répartie sur la périphérie du piston étagé (28) .

4. Bielle (1) selon l'une quelconque des revendications 2 et 3, dans laquelle les alésages de sortie de réservoir (30) peuvent être connectés à au moins un canal de débordement (29) dans le boîtier (34) par le biais d'une rainure périphérique (40).

5. Bielle (1) selon la revendication 4, dans laquelle, dans la première position de commutation (S1), l'au moins un canal de débordement (29) peut être connecté à un réservoir (T).

6. Bielle (1) selon la revendication 4 ou 5, dans laquelle, dans la deuxième position de commutation (S2), l'au moins un canal de débordement (29) peut être connecté à une source d'alimentation (P).

7. Bielle (1) selon l'une quelconque des revendications précédentes, dans laquelle le piston étagé (28) est supporté par le biais d'un ressort spiral (35) sur un couvercle de fermeture (36) du boîtier (34).

8. Bielle (1) selon la revendication 7, dans laquelle le couvercle de fermeture (36) est connecté au boîtier (34) par le biais d'un soudage ou d'un bordage ou d'un pressage.

9. Bielle (1) selon la revendication 7 ou 8, dans laquelle le couvercle de fermeture (36) présente des alésages qui sont connectés au réservoir (T).

10. Bielle (1) selon l'une quelconque des revendications précédentes, dans laquelle le piston étagé (28) peut être actionné par le biais d'une pression hydraulique sur une première surface de pression (31) hors de la première position de commutation (S1).

11. Bielle (1) selon la revendication 11, dans laquelle le piston étagé (28) peut être actionné dans la deuxième position de commutation (S2) par le biais d'une pression hydraulique sur la première surface de pression (31) et sur une deuxième surface de pression (32).

12. Bielle (1) selon l'une quelconque des revendications précédentes, dans laquelle, dans la sortie (21) du deuxième cylindre est disposé un point d'étranglement (26).

13. Bielle (1) selon l'une quelconque des revendications précédentes, dans laquelle la soupape d'inversion (5) est réalisée sous forme de soupape à 4/2 voies à commande hydraulique.
